# EUROPEAN PATENT APPLICATION

(11) **EP 4 338 818 A1**
(43) Date of publication of application: **20.03.2024**
(21) Application number: 22195374.8
(22) Date of filing: 13.09.2022
(51) Int. Cl.: B01D 46/02, B01D 46/04, B01D 46/44, B01D 46/58, B01D 46/71

(54) **FLUE GAS CLEANING SYSTEM**

(71) Applicant: Hitachi Zosen Inova AG, 8005 Zürich (CH)
(72) Inventor: WALDNER, Maurice Henri, 8005 Zürich (CH); KAMINSKY, Jan, 8005 Zurich (CH); HUSSAINY, Mamoon, 8005 Zurich (CH); BRENNWALD, Werner, 8005 Zurich (CH)
(74) Representative: Schaad, Balass, Menzl & Partner AG

(57) **Abstract**

The present application relates to a system or method for removing solid particulates and/or gaseous components from a flue gas, the system comprises one or more filter chambers 10 comprising a plurality of filter bags, each filter bag having a filter surface at which particulates are separated from a flue gas stream passing through the filter surface; at least one header tank comprising cleaning air at a controlled pressure, the header tank being connected to a cleaning air supply and being in fluid communication with at least one flow valve; and a first controller configured to control opening and closing of the flow valve in response to a data input indicating a differential pressure across all filter chambers of the system has reached a predetermined setpoint. The system uses the first or a second controller to control a residence time of the flue gas by adjustment of:
i. the pressure of the cleaning air in the header tank based on a measured time between two consecutive pulses to maintain a constant average residence time of the flue gas across all filter chambers; and/or
ii. the cleaning frequency for each filter chamber based on measured values of differential pressure and gas flow per chamber to balance the residence time of the flue gas across all filter chambers within the filter system.

## Description

The present application is directed to a system and a method for removing solid particulates and/or gaseous components from a flue gas with the aid of fabric cleaning filters.

Fabric filter systems, also known as baghouses, are air pollution control devices that remove particulates and gaseous components out of air or gas released from industrial plants, such as incineration plants, power plants, food processing plants. Typical fabric filter systems are made up of one or more chambers, wherein each chamber includes a plurality of rows of filters - generally referred to filter bags (or simply "bags") - that act as filter media. Particulate-laden gas or air enters the fabric filter and is drawn through the bags, either on the inside or the outside depending on the cleaning method, and accumulates to form a layer of dust known as filter cake. The filter cake itself acts as filtering element, with the particles making up the filter cake capturing incoming fine particles from gases prior to releasing the latter into the environment. In so-called dry flue gas cleaning systems, an absorbent, e.g. hydrated lime or sodium bicarbonate, is used in the filter cake to absorb acid gas components, such as SO₂ or HCl, present in the flue gas.

As the filter cake builds up on the filter fabric, it becomes more difficult for air or gases to move through the filter, which at some point reduced the ability of the filter to continue filtering particulates. For that reason, the fabric filters need to be cleaned by removing at least part of the filter cake. There are different cleaning methods that can be applied for that purpose, with the most common being mechanical shakers, reverse air, and pulse-jet.

The present application concerns pulse-jet filter systems, in which pulses of high-pressure air are used to remove the filter cake that has accumulated on the filter fabric. In operation, these pulses or blasts of pressurized air cause the filter fabric, which is typically positioned on a cage or frame, to initially dynamically expand, thereby fracturing the particulate layer and dislodging it from the filter fabric. The dislodged particulate is typically collected in a hopper at a lower end of the baghouse. A filter system of this general type is disclosed in U.S. Pat. No. 3,726,066 to Colley et al.

While it is well established in the art how the filter fabrics are cleaned by pulse-jets, there is no agreement on how one should best determine the point in time when a certain filter or row of filters should be cleaned - or in other words, to determine the optimum time period between subsequent activations of the pulse-jet cleaning system for cleaning the filters - which is normally done row by row.

Some pulse-jet cleaning systems employed a periodic cleaning protocol and thus simply activate the pulse-jet cleaning at pre-set intervals. Other systems utilize the differential pressure across the filter media within the baghouse or within filter chambers to determine the point in time for activating the pulse-jet cleaning. The more particulate builds up on the filter media, the more difficult it is to force air through the particulate layer (filter cake) and, thus, the higher the resulting differential pressure across the filtering media. Therefore, systems have been developed to monitor the pressure drop across the fabric filter and institute a periodical cleaning process each time the pressure drop reaches a certain level.

Independent of the cleaning frequency, typical operation of pulse-jet cleaning is to clean the filters thoroughly by applying a pressure wave strong enough to remove all filter cake dust, i.e. the residual cake after a pulse is very small and approaches zero. However, as mentioned, the filter cake also acts as filtering element and a certain amount of particulate on the filter media is required for capturing incoming fine particles and absorbing gaseous components that would otherwise not be caught by the bags themselves. For instance, in dry flue gas cleaning systems, a filter bag with a low residual cake thickness after cleaning absorbs only a small amount of acid gases and, since it has almost no flow resistance, which means that the residence time of the flue gas is almost zero. As a result, the total acid gas slip through freshly cleaned rows of bags is very high compared to rows of bags that have already built up a thick filter cake since the last cleaning. On the other hand, if the filter cake is too thick, filtering performance also suffers. It follows that filtering efficiency in a baghouse depends upon an optimum layer of dust being present on the filter fabric, but for the aforementioned reasons it is the nature of the pulse-jet cleaning system used in the art to always operate the filter cake thickness between a minimum after a pulse and a maximum just before the next cleaning pulse.

In addition, pulse-jet cleaning systems known in the art commonly operate at a constant air pressure to clean a row of filters. A primary drawback of systems using constant air pressure is that they tend to decrease the wear life of the filter fabric and often use excess energy. This is because the greater the pulse pressure that is utilized, the more wear is experienced by the filter fabric. Thus, if constant air pressure is used, it is likely that either the air pressure is set too low and the cleaning performance is reduced or that the air pressure is set greater than needed to effectively clean the filter fabric, which places excess stress upon the filter media. Additionally, in the latter case, the systems utilize more energy than is needed to accomplish the cleaning task, and are therefore inefficient.

Finally, in bag filters with multiple chambers, there is typically not an even distribution of gas and particulates into the chambers. This results in differences in the cake formation velocity, average cake thickness and the velocity of the gas travelling through each chamber's individual filter cake, i.e. the residence time. In addition, the residence time of the flue gas in the filter cake also varies across the filter bags or rows of filter bags within a filter chamber. These differences in residence time are problematic as some components, in particular acid gas components, need a certain time during which they are in contact with the absorbing material. If the residence time varies throughout the filter rows or filter chambers, overall adequate absorption of these substances cannot be guaranteed.

Accordingly, there exists a need for a baghouse pulse-jet cleaning method or system, which enables optimum cleaning efficiency, reduces slip of components absorbed by the filter cake, and increases the wear life of the filter media.

This problem is solved by the system as defined in Claim 1 and the method as defined in Claim 13 of the present application. Preferred embodiments are subject to the dependent claims.

Specifically, the present invention provides a system and a method for cleaning flue gases from particulates and/or gaseous components with the aid of textile filters in filter chambers, which system and method maximize absorption performance while reducing energy consumption and prolonging the lifetime of the filters. The inventive system and method are further well suited to remove and to minimizes gas slip of acidic gaseous components, such as SO₂, from a flue gas.

Throughout the present application, the following definitions apply:
The term "flue gas" refers to any kind of gas stream released from industrial plants which contains solid particulates (e.g. dust or fly ash) and/or gaseous components that need to be removed prior to releasing the flue gas into the environment. For removing these components, the flue gas passes through conventional or membrane filter elements, e.g. filter bags or filter cartridges, which may incorporate a permanent or replaceable absorbent in the filter material or in the filtrate accumulated on the upstream side of the filter.

The "residence time" refers to the time required for the gas to pass through the filter cake. This residence time depends on the thickness of the filter cake and the velocity of the gas stream.

A cleaning system as used in line with the present invention includes a multitude of filters - which may be referred to as "filter bags", "filter fabric" or "filter media" - that are usually arranged in rows. Generally, such systems include several cleaning chambers, each cleaning chamber comprising a number of filter rows. Each filter is cleaned by a cleaning pulse, i.e. a boost of compressed air. Usually, filter bags in a row are pulsed at the same time.

The term "cycle time" is used to describe the required time to pulse all filter bags in the filter system once.

The particulates in the flue gas that cannot pass through the filter will accumulate on the filter surface on an upstream side of the filter. This accumulated mass of particulates is called filter cake. In pulse-jet cleaning, the intensity of a pulse can be set such that not all filter cake is removed by a pulse. In this case, the filter cake has a static and a dynamic part: The static part remains on the filter bag after a pulse whereas the dynamic part is removed by a pulse and builds up in the time between two cleaning pulses.

According to the present invention, a flue gas cleaning system for removing solid particulates and/or gaseous components from a flue gas is provided, the system comprising:
- one or more filter chambers comprising a plurality of filter bags, each filter bag having a filter surface at which particulates are separated from a flue gas stream passing through the filter surface;
- at least one header tank comprising cleaning air at a controlled pressure, the header tank being connected to a cleaning air supply and being in fluid communication with at least one flow valve,
wherein opening of the flow valve results in a pulse of cleaning air flowing through at least one pulse air pipe towards a group of filter bags in a particular filter chamber to dislodge particulates from the filter surface; and
- a first controller configured to control opening and closing of the flow valve in response to a data input indicating a drop of differential pressure across all filter chambers of or across an individual filter chamber of the filter system has reached a predetermined setpoint.

A key element of the present invention is that the first or a second controller is configured to control a residence time of the flue gas by adjustment of one or both of:
i. the pressure of the cleaning air in the header tank based on a measured time between two consecutive pulses to maintain a constant average residence time of the flue gas across all filter chambers;
ii. the cleaning frequency for each filter chamber based on measured values of differential pressure and gas flow per chamber to balance the residence time of the flue gas across all filter chambers within the filter system.

Thus, the present invention has identified two aspects that allow improving the cleaning efficiency or "performance" of a flue gas cleaning system:
The first aspect is the adjustment of the cleaning air pressure in the header tank in dependency of the time between two consecutive cleaning pulses (i.e. the cleaning frequency). It is common practice to initiate a cleaning pulse if a differential pressure across all filters in a filter chamber reaches a given setpoint. Whereas systems in the art have proposed to change the pulse width to achieve a constant differential pressure, the system of the present invention aims maintaining a constant average residence time of the flue gas across all filter chambers by modifying the pressure of the cleaning air in the header tank, independently of the differential pressure setpoint. This approach is based on the findings that for a given differential pressure setpoint that triggers the next pulse and a given concentration of particulates in the flue gas (i.e. upstream of the filter, there is a defined relationship between the cleaning air pressure and the cleaning frequency. In simple terms: With a high cleaning pressure, all filter cake will be removed from the filter bags, thus leading to a high cleaning efficiency. After complete removal of the filter cake, it will take a long time to build-up a new filter cake that causes a differential pressure which is high enough to trigger the next cleaning pulse. Thus, the cleaning frequency is low. On the other hand, with a low cleaning pressure not all filter cake is removed (i.e. there will be residual filter cake on the filter after a pulse) and the differential pressure setpoint will be reached after a shorter time. In this case, the cleaning efficiency is low, and the cleaning frequency is high.

In view of the above, the inventive system uses a controller that is designed to adjust the pressure of the cleaning air in the cleaning tank until the time between two cleaning pulses has reached a given setpoint. With that it can be ensured that in each cleaning cycle (in which each filter bag is cleaned once), the average time that the flue gas spends in a specific filter cake is constant. An adjustment of the pulse width is not required (although still possible, if desired).

To improve the quality of the control the pressure of the cleaning air in the header tank is preferably adjusted in further dependency of a determined concentration of particulates in the flue gas and/or an estimated filter cake bulk density. The filter cake bulk density can be estimated from samples of filter cake taken from the hopper (i.e. the place where dislodged particulate is collected).

The second aspect is the adjustment of each filter chamber's individual cleaning frequency in dependency of the differential pressure and gas flow measured for a respective chamber. It was found that the ratio between the measured differential pressure and the measured gas flow of a particular filter chamber is implicitly indicative to the concentration of particulates in the flue gas ("flue gas load"). Based on this and further on the knowledge that that the speed of the filter cake formation increases with the flow rate of the flue gas through the filter chamber and the concentration of particulates in the flue gas, the cleaning frequency can be adjusted such chambers with a fast cake formation will be cleaned more frequently than chambers with a slow cake formation. The average residence time and the cleaning frequency are reverse proportional to each other. Thus, by controlling the cleaning frequency of an individual chamber, the average residence time of the flue gas in each chamber's filter cake can also be controlled. This allows balancing the residence time of the flue gas across all filter chambers, meaning that the differences in residence time among two filter chambers are reduced. With that, the cleaning performance for each cleaning chamber can be optimized. In particular in dry or semi-dry gas cleaning systems, in which an absorbent is injected upstream of the filter into the flue gas for absorbing acidic gaseous components, a balanced residence time improves the overall acids absorption because chambers with low absorption are avoided.

Preferably, both the pressure of the cleaning air in the header tank and the cleaning frequency for each filter chamber are controlled. This results in an optimum residence time for optimal cleaning efficiency and maximum absorption efficiency.

For adjusting the pressure of the cleaning air in the header tank, the controller preferably controls opening and closing of at least one pressure control valve. A preferred type of pressure control valve is a proportional pressure control valve operated by adjusting the valve's pressure set point, preferably in a continuous way.

The pressure of the cleaning air in the header tank can thus be adjusted independent of the overall differential pressure.

The system of the present invention is particularly well suited for removing particulates and acidic gaseous components from a flue gas. It is thus preferably a dry or semi-dry gas cleaning system, in which an absorbent is injected upstream of the filter into the flue gas for absorbing acidic gaseous components. The absorbent is capable of absorbing acidic gaseous components, such as SO₂ and HCl, under the operating conditions of the filter system employed. Preferred absorbents are hydrated lime and sodium bicarbonate. After a cleaning pulse, the dynamic filter cake containing the absorbent may be recirculated. Notably, the residual (static) filter cake is generally not containing much absorbent and thus almost inert with respect to acid gas absorption.

For the adjustment of each filter chamber's individual cleaning frequency, knowledge about the differential pressure and the gas flow per chamber is required. As regards the latter, in prior art systems it is common to use one flow measurement device that measures the sum of all chamber flows. It is often assumed that a higher differential pressure over the chamber tube sheet is resulting from higher gas flow through the chamber.

However, this assumption is only correct when the particulates distribution is balanced, and all chambers get the same amounts of particulates at the chamber inlet. Further this is only true when the filter cleaning is operated with the same cleaning frequency for all chambers. For increasing the accuracy of the gas flow measurement, in the inventive system it is preferred that each chamber includes a chamber outlet connected to a clean gas duct, wherein a gas flow measurement device is installed downstream of each chamber outlet.

Preferably, each gas flow measurement device is installed in a separate outlet channel section that fluidly connects the chamber outlet of an associated filter chamber with the clean gas duct. This further improves an equal distribution of gas coming from a specific filter chamber to the inlet of an associated gas flow measurement device.

After individual measurement of the gas flow per chamber, there is no benefit in keeping the gas streams from the chamber outlets separated. It is thus preferred that downstream of the gas flow measurement devices the separate outlet channel sections of all filter chambers converge to a common clean gas duct.

Considering that the speed of the gas at a chamber outlet is significantly fluctuating it is preferred that the gas flow measurement device is equipped for integral gas flow measurement. Preferably, the gas flow measurement device is a venturi.

In addition to the above-described system, the present invention also provides a method for removing solid particulates and/or gaseous components from a flue gas. The method comprises the steps of
a) providing a filter system as claimed in any of the preceding claims, the system including:
   one or more filter chambers, each comprising a plurality of filter bags, each filter bag having a filter surface at which particulates are separated from a flue gas stream passing through the filter surface;
   at least one header tank comprising a cleaning air at a controlled pressure, the header tank being connected to a cleaning air supply and being in fluid communication with at least one flow valve, wherein opening the flow valve results in a pulse of cleaning air flowing through at least one pulse air pipe towards the filter bags to dislodge particulates from the filter surface; and
   at least one pressure control valve configured to control the pressure of the air in the header tank;
   a first controller configured to control opening and closing of the flow valve in response to a data input indicating a drop of differential pressure across a filter bag has reached a given setpoint; and
   means for measuring the cleaning pulse frequency and/or means for measuring the differential pressure and the gas flow for each filter chamber;
b) determining a concentration of particulates in the flue gas and measuring the cleaning pulse frequency; and/or measuring the differential pressure and gas flow per chamber.

The method is characterized in that it includes the further step of
c) with the aid of the first or a second controller,
adjusting the pressure of the cleaning air in the header tank based on the measured cleaning pulse frequency to maintain a constant average residence time of the flue gas across all filter chambers; and/or
adjusting the cleaning frequency for each filter chamber based on measured values of differential pressure and gas flow per filter chamber to balance the residence time of the flue gas across all filter chambers within the filter system.

The pressure of the cleaning air in the header tank is preferably adjusted in further dependency of a determined concentration of particulates in the flue gas and/or an estimated filter cake bulk density. This improves the control of the pressure of the cleaning air.

The inventive method is preferably used in a dry flue gas cleaning system for removing particulates and acidic gaseous components from a flue gas.

For enabling gas flow measurements with high accuracy, it is preferred that the gas flow per filter chamber is measured with the aid of a respective gas flow measurement device, preferably a venturi, that is installed downstream of a pertaining chamber outlet. In other words; there is preferably an equal number of filter chambers and gas flow measurement devices.

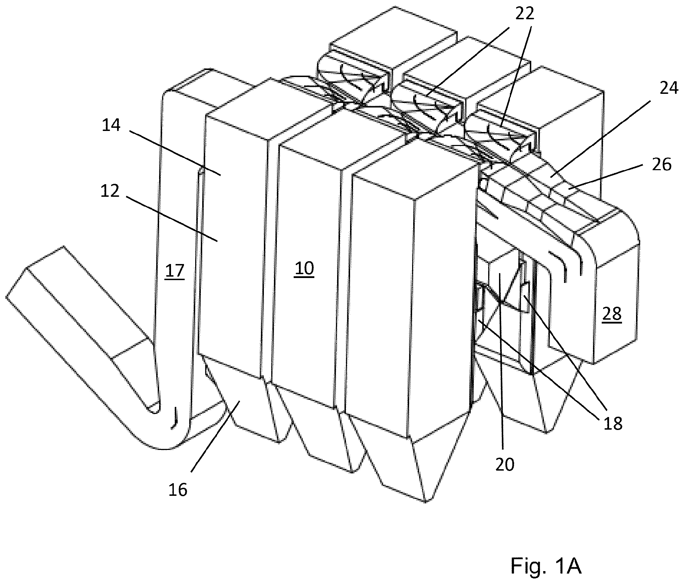

The preferred feature of individual gas flow measurement is described in more detail in connection with the attached figures in which
- Fig. 1A: shows part of an embodiment of a filter system in accordance with the present invention, the system including six filter chambers arranged in two filter rows, each filter chamber having a chamber outlet connected to a respective flow measurement device;

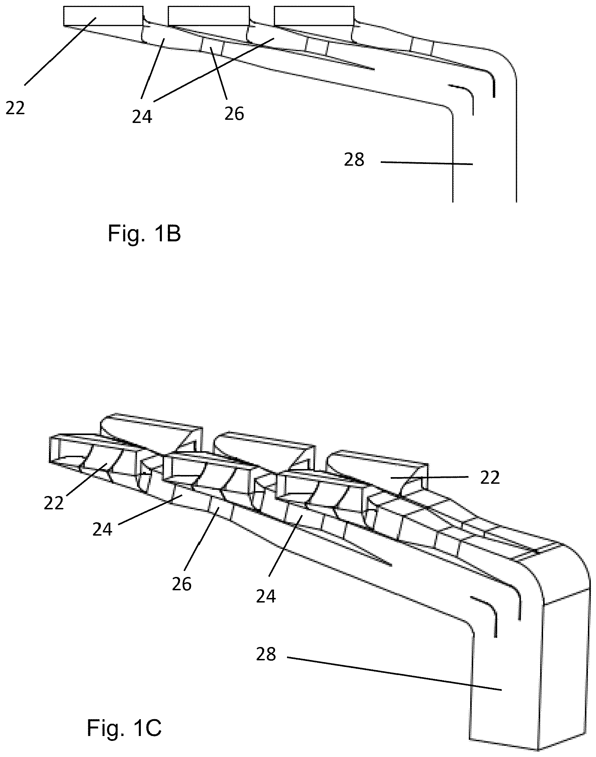

- Fig. 1B: shows a section through a row of chamber outlets and gas flow measurement devices of the system of Fig. 1A; and
- Fig. 1C: shows a perspective view of the two rows of chamber outlets and pertaining gas flow measurement devices of Fig. 1A.

Fig. 1A shows part of a flue gas cleaning system according to an embodiment of the present invention. In the shown example the system includes six filter chambers 10 inside a respective tubular housing 12 having a main upper section 14 of rectangular cross-section and a tapering lower collection section 16 ("hopper") for collection of particulates that were filtered off the flue gas. Inside, each filter chamber includes several rows with a plurality of filter bags (the inside of the filter chambers is not shown). The shown system is designed for dry flue gas cleaning in which an absorbent, such as hydrated lime or sodium bicarbonate, is injected into the flue gas upstream of the filter to absorb acidic gaseous components from the flue gas. Injection of the absorbent occurs from a reactor 17, which in the shown embodiment is in the shape of a gas duct. However, other shapes and designs of the reactor are of course possible.

At predetermined time intervals, the upstream surfaces of the cleaning bags are cleaned from accumulated particulates (filter cake) by pulsed injection of compressed cleaning air. The cleaning air is released from a header tank at a defined pressure and supplied via pulse air pipes to all or a group of, e.g. rows of, filter bags in a particular filter chamber. The filter bags, the header tank and pulse air pipes are not shown in the figures. These parts of pulse-jet filter cleaning systems are well known in the art, e.g. from U.S. Pat. No. 3,726,066.

The particulates detached from the filter surface by a pulse are collected in the collection section 16 for later removal. If an absorbent is used for absorbing gaseous components from the flue gas, said absorbent will accumulate in the filter cake. It is common practice to recirculate at least part of the absorbent-containing filter cake that is detached from the filter surface and collected in the collection section. In the shown embodiment, re-injection of the absorbent-containing filter cake material will occur through the reactor 17.Each filter chamber has a chamber inlet 18 fluidly connected to a flue gas supply duct 20 for delivery of flue gas containing solid particulates and acidic gaseous components that need to be removed. In Fig. 1A, only one flue gas supply duct is visible. Each filter chamber 10 further comprises a respective chamber outlet 22 for releasing cleaned flue gas after passing the filter bags inside the filter chamber. Each chamber outlet 22 is fluidly connected to an associated separate outlet channel section 24 in which a respective flow measurement device 26 is installed for measuring the integral gas flow of the associated filter chamber. The separate outlet channel sections 24 of all filter chambers 10 converge further downstream to a common clean gas duct 28. The provision of a separate flow measurement device 26 for each filter chamber 10 and placement thereof in a separate channel section 24 ensures that there is a uniform gas distribution of gas from a particular filter chamber to the inlet of the associated flow measurement device. This enables an accurate measurement of the gas flow coming from an individual filter chamber. The flow measurement devices can be venturis or rows of instruments (e.g. pitot or prandtl tubes) that measure the dynamic pressure of the gas flow . An integral measurement gives a robust and accurate flow rate, irrespective of fluctuating gas velocity profiles.

The system further includes a controller (not shown) for adjusting the cleaning frequency for each chamber based on measured values of individual differential pressure and gas flow through each filter chamber. More specifically, measured differential pressure per chamber and the measured individual chamber flow rate are used as data input for the controller to adjust the cleaning frequency of each filter chamber with the goal to set a constant residence time for each chamber.

Fig. 1B shows in isolation a section through a row of chamber outlets 22 and gas flow measurement devices 26 of the system of Fig. 1A. Here it is clearly visible that each filter chamber outlet 22 is fluidly connected to an individual separate outlet channel section 24 that contains a respective gas flow measurement device 26. It is further shown how further downstream all outlet separate channel sections come together and merge into the common clean gas duct 28. In the shown embodiment, three filter chambers are arranged in a row and the outlet channel sections 24 of these three filter chambers run parallel and at a vertical distance to each other before they merge into the common clean gas duct 28.

Fig. 1C shows in a perspective view the two rows of chamber outlets 22 with the associated separate outlet channel sections 24 and pertaining gas measurement devices 26 in isolation. The separate outlet channel sections 24 of all six filter chambers converge to the common clean gas duct 28.

## Claims

1. A flue gas cleaning system for removing solid particulates and/or gaseous components from a flue gas, the system comprising:
one or more filter chambers (10) comprising a plurality of filter bags, each filter bag having a filter surface at which particulates are separated from a flue gas stream passing through the filter surface;
at least one header tank comprising cleaning air at a controlled pressure, the header tank being connected to a cleaning air supply and being in fluid communication with at least one flow valve,
wherein opening of the flow valve results in a pulse of cleaning air flowing through at least one pulse air pipe towards a group of filter bags in a particular filter chamber to dislodge particulates from the filter surface; and
a first controller configured to control opening and closing of the flow valve in response to a data input indicating a differential pressure across all filter chambers of the system has reached a predetermined setpoint;
**characterized in that** the first or a second controller is configured to control a residence time of the flue gas by adjustment of one or both of:
i. the pressure of the cleaning air in the header tank based on a measured time between two consecutive pulses to maintain a constant average residence time of the flue gas across all filter chambers;
ii. the cleaning frequency for each filter chamber based on measured values of differential pressure and gas flow per chamber to balance the residence time of the flue gas across all filter chambers within the filter system.

2. System according to Claim 1, **characterized in that** the controller allows adjustment of both, the pressure of the cleaning air in the header tank and the cleaning frequency for each filter chamber.

3. System according to Claim 1 or 2, **characterized in that** the controller is a PID controller.

4. System according to any of the preceding Claims, **characterized in that** the pressure of the cleaning air in the header tank is adjusted by opening and closing of at least one pressure control valve controlled by the controller.

5. System according to Claim 4, **characterized in that** the pressure control valve is a proportional pressure control valve operated by adjusting the valve's pressure set point, preferably in a continuous way.

6. System according to any of the preceding Claims, **characterized in that** the pressure of the cleaning air in the header tank is adjusted independent of the overall differential pressure.

7. System according to any of the preceding Claims, **characterized in that** the pressure of the cleaning air in the header tank is adjusted in further dependency of a determined concentration of particulates in the flue gas and/or an estimated filter cake bulk density.

8. System according to any of the preceding Claims, **characterized in that** the system is a dry or semi-dry gas cleaning system, in which an absorbent is injected upstream of the filter into the flue gas for absorbing acidic gaseous components.

9. System to any of the preceding Claims, **characterized in that** each filter chamber (10) includes a chamber outlet (22) connected to a clean gas duct, wherein a gas flow measurement device (26) is installed downstream of each chamber outlet (22).

10. System according to Claim 9, **characterized in that** each gas flow measurement device (26) is installed in a separate outlet channel section (24) that fluidly connects the chamber outlet (22) of an associated filter chamber (10) with the clean gas duct.

11. System according to Claim 10, **characterized in that** the separate outlet channel sections (24) of all filter chambers (10) converge to a common clean gas duct (28).

12. System according to any of Claims 9 to 11, **characterized in that** the gas flow measurement device (26) is equipped for integral gas flow measurement, and is preferably a venturi.

13. Method for removing solid particulates and/or gaseous components from a flue gas, the method comprising the steps of
a) providing a filter system as claimed in any of the preceding claims, the system including:
one or more filter chambers (10), each comprising a plurality of filter bags, each filter bag having a filter surface at which particulates are separated from a flue gas stream passing through the filter surface;
at least one header tank comprising a cleaning air at a controlled pressure, the header tank being connected to a cleaning air supply and being in fluid communication with at least one flow valve, wherein
opening the flow valve results in a pulse of cleaning air flowing through at least one pulse air pipe towards all or a group of filter bags in a particular filter chamber to dislodge particulates from the filter surface; and
at least one pressure control valve configured to control the pressure of the air in the header tank;
a first controller configured to control opening and closing of the flow valve in response to a data input indicating a differential pressure across all filter chambers within the filter system has reached a given setpoint;
means for measuring the cleaning pulse frequency and /or means for measuring the differential pressure and the gas flow for each filter chamber;
b) determining a concentration of particulates in the flue gas and measuring the time between two consecutive pulses; and/or measuring the differential pressure and gas flow per chamber;
c) with the aid of the first or a second controller,
adjusting the pressure of the cleaning air in the header tank based on the measured cleaning pulse frequency to maintain a constant average residence time of the flue gas across all filter chambers; and/or
adjusting the cleaning frequency for each filter chamber based on measured values of differential pressure and gas flow per filter chamber to balance the residence time of the flue gas across all filter chambers within the filter system.

14. Method according to Claim 13 for use in a dry flue gas cleaning system for removing particulates and acidic gaseous components from a flue gas.

15. Method according to Claim 14, **characterized in that** the gas flow per filter chamber is measured with the aid of a respective gas flow measurement device (26), preferably a venturi, that is installed downstream of a pertaining chamber outlet (22).
